# EUROPÄISCHE PATENTSCHRIFT

(11) **EP 1 050 338 B1**
(45) Veröffentlichungstag und Bekanntmachung des Hinweises auf die Patenterteilung: **09.07.2003**
(21) Anmeldenummer: 00109110.7
(22) Anmeldetag: 04.05.2000
(51) Int. Cl.: B01J 4/04, B01J 19/00, B01J 19/18

(54) **Chemischer Aktor**
Chemical actuator
Actionneur chimique

(30) Priorität: 06.05.1999 DE 19920885
(43) Veröffentlichungstag der Anmeldung: 08.11.2000
(73) Patentinhaber: EADS Deutschland GmbH, 85521 Ottobrunn (DE)
(72) Erfinder: Nitschke, Felix Dr., 81371 München (DE)

(56) Entgegenhaltungen:
- DE-A- 19 707 198
- GB-A- 2 250 920
- US-A- 4 226 695

## Beschreibung

Die Erfindung betrifft einen chemischen Aktor mit elektrischer oder thermischer Ansteuerung gemäß dem Oberbegriff des Patentanspruches 1.

Elektrochemische Aktoren - sogenannte ECAs - sind z.B. als pneumatisch wirkende Aktoren bekannt. Diese beruhen auf der Entwicklung von Wasserstoff durch die Elektrolyse eines alkalischen Elektrolyten. Wegen der hohen Kompressibilität des erzeugten Gases weisen diese ECAs zwangsläufig nur eine geringe Steifigkeit auf und ihre Fähigkeit Arbeit zu leisten ist deshalb ebenfalls nur gering. Wegen den vorgenannten Nachteilen können derartige ECAs nicht in aktive Streben von adaptiven Strukturen, wie z.B. in adaptiven Flugzeugtragflügeln, integriert werden.

Ebenfalls bekannt sind ECAs, deren aktorisches Prinzip auf der Volumensänderung von Festkörpern beruht, die z.B. durch Interkalationsreaktionen hervorgerufen werden. Mit derartigen ECAs kann prinzipiell viel Kraft bei geringem Hub erzielt werden. Die Nutzung dieser ECAs ist wegen des geringen Hubes auf wenige Spezialfälle begrenzt.

Aufgabe der Erfindung ist es, einen chemischen Aktor mit hoher Steifigkeit, ausreichendem Hub und Arbeitsvermögen zu schaffen.

Diese Aufgabe wird erfindungsgemäß durch die Merkmale des Patentanspruchs 1 gelöst. Weiterbildungen der Erfindung sind in den Unteransprüchen angegeben.

Die Erfindung nutzt vorteilhaft die kontrollierte Erzeugung von osmotischem Druck zur Lösung der vorgenannten Aufgabe. Erfindungsgemäß wird dazu osmotischer Druck über eine elektrochemische oder eine thermische Steuerung der Konzentration von in Flüssigkeiten gelösten Stoffen beeinflußt.

Die erzeugten osmotischen Drücke können sehr hoch sein; z.B. erzeugt schon eine 1-molare Lösung gegenüber dem Druck in einem reinen Lösungsmittel einen osmotischen Druck von ca. 30 bar. Bei dissoziierten Salzen ist der osmotische Druck entsprechend den gebildeten x Ionen näherungsweise x-mal größer, als bei nicht-dissozierenden Verbindungen.

Die osmotische Druckdifferenz wird in zwei durch eine semipermeable Membran getrennten, mediumgefüllten Räumen erzeugt, von denen mindestens einer mit einem Kolben abgeschlossen ist, an dem der Aktor seine Arbeit verrichtet. Der Verfahrweg der Kolben - und damit der Hub des Aktors - ist beliebig groß, da erst bei einer unendlichen Verdünnung ein Druckausgleich eintritt und die die osmotische Druckdifferenz durch die Einspeisung von elektrischer oder thermischer Energie stets wieder hergestellt werden kann.

Von weiterem Vorteil ist die Eigenschaft des erfindungsgemäßen Aktors, daß er bei einer Unterbrechung seiner elektrischen oder thermischen Ansteuerung auf einer angefahrenen Position beliebig lange ohne Energieaufwand halten läßt.

Das spezifische Arbeitsvermögen eines erfindungsgemäßen Aktors beträgt bezogen auf das Arbeitsmedium z.B. 1 kj/l bei einem osmotischen Druck von nur 10 bar. Bei Wasser als Arbeitsmedium wäre dies ein Wert von 1 kj/kg. Ein menschlicher Muskel hat nur ein Arbeitsvermögen von ca. 0,3 kj/l; bei elektromagnetischen und piezoelektrischen Aktoren ist das spezifische Arbeitsvermögen noch deutlich kleiner als der letztgenannte Wert.

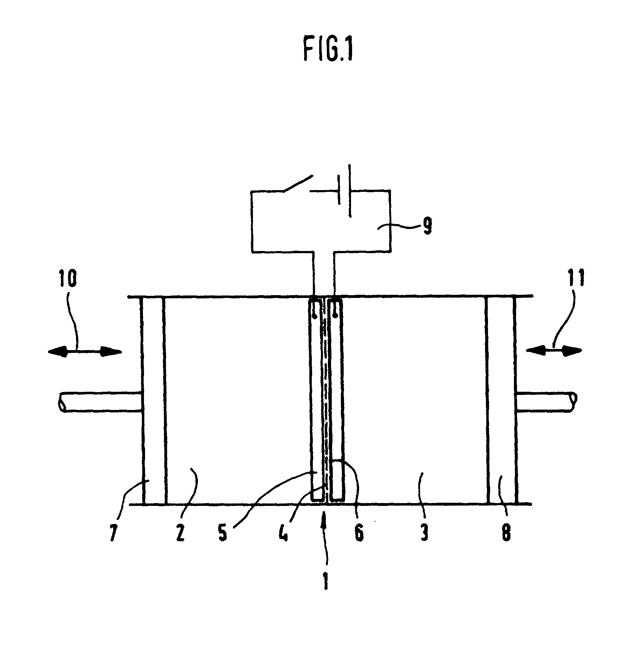

Anhand der Zeichnung wird nachstehend ein Ausführungsbeispiel der Erfindung näher beschrieben.

Der in der Figur (Fig.) im Prinzip gezeigte Aktor 1 besteht aus zwei Kammern 2,3, einer Membran 4, zwei Elektroden 5,6, zwei Kolben 7,8 und einer Stromquelle 9.

In der Kammer 2 befindet sich als Lösungsmittel beispielsweise reines Wasser sowie Jod in elementarer Form. Das elementare Jod liegt vorzugsweise gebunden vor, z.B. als interkaliertes Element in der aus Graphit bestehenden Elektrode 5 ; es kann jedoch freier auch in kristalliner Form auf einer Elektrode vorliegen. Das reine Wasser weist somit einen niedrigen osmotischen Druck auf.

In der Kammer 3 befinden sich eine wässrige Lösung von Jodwasserstoffsäure und die Elektrode 6, die ebenfalls aus Graphit aufgebaut ist, jedoch kein Jod enthält. Das Wasser in Kammer 3 weist einen osmotischen Druck näherungsweise proportional der doppelten Konzentration der Jodwasserstoffsäure auf, die sehr gut wasserlöslich ist und einen hohen Dissoziationsgrad aufweist.

Die Innenräume der beiden aneinandergrenzenden Kammern 2,3 sind über die Membran 4 miteinander verbunden, die protonenleitfähig und semipermeabel ist. Im Ausführungsbeispiel wird als Membran 4 das Produkt Nafion der Firma Dupont verwendet. Es können anstelle von einer Membran auch zwei parallelgeschaltete Membranen verwendet werden, von denen eine protonenleitfähig und die andere semipermeabel ist. Die vorangehend vorgeschlagene Membran 4 läßt nur das Wasser und die Protonen durch; jedoch nicht gelöste Jodidionen. Sie ist mechanisch so unterstützt, daß sie Drücke von einigen 10 bar aushält. Diese Unterstützung wird von den beidseitig zur Membran 4 benachbart angeordneten Elektroden 5 und 6 ausgeübt. Die Elektroden 5 und 6 sind porös ausgebildet, damit ein für den Aktor erforderlicher Lösungsmittel- und Protonentransport über sie in die Kammern 2 und 3 hinein stattfinden kann.

Die beiden Elektroden 5 und 6 sind an eine Stromquelle 9 angeschlossen. Wird damit die Elektrode 5 auf ein negatives und die Elektrode 6 auf ein positives Potential gelegt, so wird an der Elektrode 5 aus dem elementaren Jod Jodid und an der Elektrode 6 aus dem gelösten Jodid Jod gebildet. Die Protonen, die aus Gründen der Ladungsneutralität für diesen Prozeß in Kammer 2 benötigt und in Kammer 3 freigegeben werden, fließen über die Membran 4. Damit ist der elektrische Stromkreis geschlossen. Jodwasserstoffsäure wird damit quasi von Kammer 3 nach Kammer 2 "transportiert" verbunden mit einem Anstieg des osmotischen Druckes in Kammer 2. Wird die Stromquelle 9 mit entgegengesetzter Polarität an die Elektroden 5 und 6 angeschlossen, so erfolgt der "Transport" von Jodwasserstoffsäure in entgegengesetzter Richtung von Kammer 2 nach Kammer 3.

Damit der voranstehend beschriebene Aktor 1 Arbeit verrichten kann, muß mindestens eine der beiden Kammern 2,3 mit einem Kolben 7,8 abgeschlossen sein. Im Ausführungsbeispiel sind beide Kammern 2,3 mit je einem Kolben 7,8 abgeschlossen. Das Lösungsmittel Wasser strömt durch die Membran 4 entsprechend der von den osmotischen Drücken erzeugten Druckdifferenz und wirkt als Arbeitsmittel auf die Kolben 7 und 8 ein. Diese bewegen sich bei einer Erhöhung der Druckdifferenz entsprechend den Richtungspfeilen 10 und 11 gleichsinnig nach außen.

Der nutzbare Verfahrweg ist beliebig groß, da erst bei einer unendlichen Verdünnung der Druckausgleich hergestellt ist und die osmotische Druckdifferenz elektrochemisch stets wieder hergestellt werden kann.

Durch eine Abschaltung der Stromquelle 9 läßt sich der elektrochemische Aktor 1 auf der angefahrenen Position beliebig lange ohne Energieaufwand halten.

Die erfindungsgemäße Lösung ist nicht wie voranstehend beschrieben auf das System Jodwasserstoffsäure mit einem Protonentransport über die Membran 4 und einer Abscheidung/Auflösung von Jod beschränkt. Sofern man über eine entsprechende lonenaustauschermembran verfügt und entsprechende Elemente abscheiden kann, läßt sich das Prinzip übertragen, z.B. auf Zinkchlorid mit einem Transport von Chloridionen über eine geeignete Membran und der Abscheidung/Auflösung von Zink.

Das der erfindungsgemäßen Lösung zugrunde liegende Prinzip läßt sich in abgewandelter Form auf chemisch-wirkende Aktoren mit thermischer Ansteuerung übertragen. Eine der Kammern enthält bei dieser Ausführung eine übersättigte Lösung,z.B. eines Salzes, mit Bodensatz, dessen Löslichkeit und damit der osmotische Druck stark temperaturabhängig ist. Die Membran zu der anderen Kammer, die mit dem reinen Lösungsmittel gefüllt ist, kann in diesem Fall einfach gestaltet sein, da wegen des fehlenden Stromkreises kein lonentransport über die Membran erfolgen muß. Ein elektrisch gesteuerter chemischer Aktor weist aber im Vergleich zu dem letztgenannten Ausführungsbeispiel eine bessere Regelbarkeit auf.

## Patentansprüche

1. Chemischer Aktor mit mindestens einer Kammer, in der eine druckerzeugende chemische Reaktion gesteuert abläuft und mindestens auf einen Kolben wirkt, an dem der Aktor seine Arbeit verrichtet, **dadurch gekennzeichnet, daß** der Aktor (1) aus zwei aneinandergrenzenden Kammern (2,3) besteht, die beide mit demselben flüssigen Lösungsmittel gefüllt sind, daß die Konzentrationen von gelösten Stoffen in den einzelnen Kammern (2,3) elektrisch oder thermisch gesteuert veränderbar sind und daß die Innenräume der Kammern (2,3) durch eine semipermeable, für das Lösungsmittel durchlässige Membran (4) voneinander getrennt sind.

2. Aktor nach Anspruch 1, **dadurch gekennzeichnet, daß** sich in einer der Kammern (2,3) Wasser als Lösungsmittel und Jod in elementarer, gebundener Form befindet, daß die andere Kammer Jodwasserstoffsäure enthält, daß in jede Kammer (2,3) eine Elektrode (5,6) hineinragt, die von einer elektischen Stromquelle (9) zur Beeinflussung der gelösten Jodkonzentrationen in den Kammern (2,3) gespeist sind und daß die semipermeable Membran (4) protonenleitfähig ist.

3. Aktor nach Anspruch 2, **dadurch gekennzeichnet, daß** die Elektroden (5,6) die Membran (4) beidseitig abstützen, aus Graphit bestehen und porös sind.

4. Aktor nach Anspruch 3, **dadurch gekennzeichnet, daß** das elementare Jod interkaliert in der Elektrode (5) gebunden ist.

5. Aktor nach Anspruch 1, **dadurch gekennzeichnet, daß** sich in den Kammern (2,3) ein Metallchlorid als Salz befindet, daß in jede Kammer (2,3) eine Elektrode (5,6) hineinragt, die von einer elektischen Stromquelle (9) zur Beeinflussung der gelösten Metallkonzentration in den Kammern (2,3) gespeist sind und daß die Membran (4) Chloridionen leitet.

6. Aktor nach Anspruch 1, **dadurch gekennzeichnet, daß** eine Kammer (2) eine übersättigte Lösung eines Salzes mit Bodensatz enthält, dessen Löslichkeit stark temperaturabhängig ist, daß die andere Kammer (3) reines Lösungsmittel enthält, daß eine steuerbare Wärmequelle zur Temperatursteuerung der Salzlösungen vorgesehen ist.

## Claims

1. Chemical actuator having at least one chamber, in which a pressure-generating chemical reaction takes place in a controlled manner and acts at least on one piston, by means of which the actuator carries out its work, **characterised in that** the actuator (1) comprises two adjoining chambers (2, 3) which are both filled with the same fluid solvent, **in that** the concentrations of dissolved substances in the individual chambers (2, 3) are variable in an electrically or thermally controlled manner, and **in that** the interiors of the chambers (2, 3) are separated from each other by a semi-permeable membrane (4) which is permeable to the solvent.

2. Actuator according to claim 1, **characterised in that**, in one of the chambers (2, 3), water is present as the solvent and iodine is present in an elemental, bonded form, **in that** the other chamber contains hydriodic acid, **in that** one electrode (5, 6) protrudes into each chamber (2, 3), which electrodes are supplied from an electrical current source (9) to influence the dissolved iodine concentrations in the chambers (2, 3), and **in that** the semi-permeable membrane (4) is proton-conductive.

3. Actuator according to claim 2, **characterised in that** the electrodes (5, 6) support the membrane (4) at both sides, comprise graphite and are porous.

4. Actuator according to claim 3, **characterised in that** the elemental iodine is bound to the electrode (5) in an intercalated manner.

5. Actuator according to claim 1, **characterised in that** a metal chloride is present as the salt in the chambers (2, 3), **in that** one electrode (5, 6) protrudes into each chamber (2, 3), which electrodes are supplied from an electrical current source (9) to influence the dissolved metal concentrations in the chambers (2, 3), and **in that** the membrane (4) conducts chloride ions.

6. Actuator according to claim 1, **characterised in that** one chamber (2) contains a super-saturated solution of a salt with sediment, whose solubility is greatly temperature-dependent, **in that** the other chamber (3) contains pure solvent, and **in that** a controllable heat source is provided to control the temperature of the salt solutions.

## Revendications

1. Actionneur chimique comportant au moins une chambre dans laquelle s'exécute de manière commandée une réaction chimique engendrant une pression agissant sur au moins un piston dont l'actionneur exécute son travail,
**caractérisé en ce que**
l'actionneur (1) est formé de deux chambres (2, 3) adjacentes, toutes deux remplies de la même solution de fluide,
les concentrations de matière dissoutes dans les différentes chambres (2, 3) étant commandées de manière électrique ou chimique, pour être modifiées, et les volumes intérieurs des chambres (2, 3) sont séparés par une membrane (4) semi perméable, perméable à l'agent solvant.

2. Actionneur selon la revendication 1,
**caractérisé en ce que**
dans l'une des chambres (2, 3) il y a de l'eau comme agent solvant et de l'iode à l'état élémentaire lié, et l'autre chambre contient de l'acide iodhydrique, et
dans chaque chambre (2, 3) pénètre une électrode (5, 6), ces électrodes étant alimentées par un courant de source électrique (9) pour influencer les concentrations en iode, dissoutes dans les chambres (2, 3), et l'enveloppe semi perméable (4) est conductrice de protons.

3. Actionneur selon la revendication 2,
**caractérisé en ce que**
les électrodes (5, 6) qui soutiennent la membrane (4) des deux côtés sont en graphite et poreuses.

4. Actionneur selon la revendication 3,
**caractérisé en ce que**
l'iode élémentaire est combiné de manière intercalaire à l'électrode (5).

5. Actionneur selon la revendication 1,
**caractérisé en ce qu'**
un chlorure métallique sous forme de sel se trouve dans les chambres (2, 3),
dans chaque chambre (2, 3) pénètre une électrode (5, 6) alimentée chacune par une source électrique (9) pour influencer la concentration métallique dissoute dans les chambres (2, 3) et la membrane (4) conduit des ions chlorure.

6. Actionneur selon la revendication 1,
**caractérisé en ce que**
la chambre (2) contient une solution sursaturée d'un sel avec une réserve de fond, dont la solubilité dépend fortement de la température et l'autre chambre (3) contient un solvant pur ayant une source de chaleur commandée pour régler la température de la solution saline.
